# EUROPEAN PATENT APPLICATION

(11) **EP 0 874 062 A2**
(43) Date of publication of application: **28.10.1998**
(21) Application number: 98201850.9
(22) Date of filing: 04.11.1996
(51) Int. Cl.: C22C 1/05

(54) **Heat resistant stainless steel wire or strip**

(30) Priority: 06.11.1995 JP 313554/95; 29.01.1996 JP 34387/96
(62) Divisional of application: 96307965.2
(71) Applicant: ISUZU CERAMICS RESEARCH INSTITUTE CO., LTD., Fujisawa-shi, Kanagawa-ken (JP)
(72) Inventor: Oosumi, Kazuo, Fujisawa-shi, Kanagawa-ken (JP)
(74) Representative: Jenkins, Peter David

(57) **Abstract**

A heat resistant wire or strip comprising an austenitic stainless steel wire or strip, a first layer comprising aluminum and an iron-aluminum alloy formed as an outermost surface, and a second layer comprising an aluminum-iron compound and an aluminum-nickel compound dispersed in a ferritic stainless steel mainly comprising iron-chrome formed as an intermediate layer.

## Description

The present invention relates to heat resistant stainless steel wire or strip for an electric heater as used in a preheating plug for a diesel engine, and particularly to heat resistant stainless steel wire or strip in which the bonding forces of a covering layer relative to the substrate steel wire are strong.

Methods for applying a ceramic-metal composite covering to the surface of a base material or substrate metal known to date include Chemical Vapor Deposition (CVD), Physical Vapor Deposition (PVD), Solgel, flame coating and the like.

However, in the CVD method, materials for the substrate metal and the covering layer are restricted, and in the PVD method, the bonding force or adhesion force between the substrate metal and the covering layer is weak. Further, in the Solgel method, the bonding force or adhesion force between the substrate metal and the covering layer is weak, and it is difficult to form a covering layer whose thickness exceeds 1 micron. Particularly, it is necessary to finely roughen the surface of the substrate metal by shot blasting or the like before applying the covering layer. It is therefore very difficult to form a covering layer on metal parts such as a thin wire, a thin sheet, small articles, etc..

Japanese Patent Application Laid-Open No. 287407/1993 discloses an example in which alloy powder such as nickel alloy, cobalt alloy, etc., is provided in firm contact with the surface of a ceramic powder such as relatively coarse silicon nitride, alumina, etc., in order to provide a ceramic based powder for covering the surface of a substrate metal such as a machining tool. However, such substrate metals have insufficient mechanical strength and the uses thereof are thus limited.

On the other hand, stainless steel covered with aluminum by melt plating to provide enhanced heat resistance has been put to practical use. However, in a thin stainless steel wire or sheet covered with aluminum by melt plating, the aluminum alloy layer obtained by melt plating is brittle. Moreover, stainless steel as a substrate metal becomes brittle at high temperature. Likewise, an aluminum alloy layer obtained by diffusion treatment is also brittle, which alloy layer can be peeled off from the stainless steel wire or strip as a base material or substrate metal at high temperature. In addition, the substrate metal also becomes brittle.

In view of the aforementioned problems, an aim of the present invention is to provide a heat resistant stainless steel wire or strip which has a strong bonding force relative to a covering layer.

Another aim of the present invention is to provide a heat resistant stainless steel wire or strip in which a strong intermediate layer is formed between an aluminum covering layer and a substrate metal, thereby to enhance the heat resistance and the durability of the wire or strip.

Accordingly, the present invention provides a heat resistant wire or strip comprising a stainless steel wire or strip containing chrome (Cr) covered with a covering layer formed of one of nickel (Ni) group alloy particles containing aluminum (Al) covered with ceramic particles or chrome (Cr) group alloy particles containing aluminum (Al) covered with ceramic particles.

The present invention also provides a heat resistant wire or strip comprising a stainless steel wire or strip containing chrome (Cr) covered with a covering layer of one of nickel (Ni) group alloy particles containing aluminum (Al) covered with ceramic particles or chrome (Cr) group alloy particles containing aluminum (Al) covered with ceramic particles, and a fine ceramic layer covering said covering layer.

The present invention further provides a heat resistant wire or strip comprising an austenitic stainless steel wire or strip, a first layer comprising aluminum and an iron-aluminum alloy formed as an outermost surface, and a second layer comprising an aluminum-iron compound and an aluminum-nickel compound dispersed in a ferritic stainless steel mainly comprising iron-chrome formed as an intermediate layer.

In a preferred embodiment the thickness of the first layer is 10 micron or less, and the average diameter of the crystalline particles of the second layer is 10 to 30 micron.

The heat resistant wire of this invention uses a thin stainless steel wire or strip as the substrate metal, in particular of circular and thin rectangular section.

In a preferred embodiment a mixture of ceramic particles or powder having a uniform particle size distribution and an average particle diameter of 1 micron or less and alloy particles or powder is adhered to the surface of a thin steel wire or strip, as the substrate metal, by an organic solvent and then heat treated in vacuum to obtain the heat resistant steel wire or strip. By the heat treatment the ceramic and alloy powders are reduced by carbon in the organic solvent and deposited on the thin steel wire or strip.

In a preferred embodiment, as the substrate metal, thin steel wire or strip containing, in addition to chrome (Cr), at least one of nickel (Ni), aluminum (Al) and yttrium (Y), that is, thin stainless steel wire is selected. As the ceramic powder, at least one of aluminum (Al), silicon (Si), magnesium (Mg), zirconium (Zr), barium (Ba) and titanium (Ti) can be selected. More specifically, oxides such as Al₂O₃, SiO₂, Mg0, ZrO₂, BaTiO₃, TiO₂, etc., can be selected. As the alloy powder, nickel (Ni) based alloy powder containing aluminum (Al), preferably Ni-Cr-Al alloy powder, can be selected.

In order to improve the durability of the thin stainless steel wire or strip, the alloy powder of chrome and aluminum is bonded on the surface of the thin stainless steel wire or strip as the substrate metal using an adhesive and then heat treated for about two hours in vacuum at a temperature of 1100°C. With this treatment, a first layer of 10 micron or less in thickness comprising aluminum and an iron-aluminum alloy is formed as the outermost surface of the thin stainless steel wire or strip, a second layer of 20 micron or more in thickness comprising an aluminum-iron compound and an aluminum-nickel compound dispersed into a ferritic stainless steel mainly comprising iron-chrome is formed as an intermediate layer, and a thin austenitic based stainless steel wire or strip is present in the center portion of the heat resistant wire or strip.

In a particularly preferred embodiment the mixture of ceramic powder and alloy powder is adhered to the surface of the substrate metal using an adhesive such as synthetic rubber and then heat treated in vacuum to obtain a heat resistant stainless steel wire or strip having a covering layer with a large bonding force relative to the substrate metal.

In a preferred embodiment the chrome-aluminum particles are adhered to the surface of the thin austenitic stainless steel wire or strip which is then heat treated to obtain a heat resistant stainless steel wire or strip having a ferritic Fe-Cr-Ni-Al alloy layer on the surface thereof, which wire or strip has excellent heat resistance and tensile strength.

As a substrate metal having a relatively good processability is used, the heat resistant stainless steel wire or strip according to the present invention can be readily worked plastically even if the wire diameter or strip thickness is small.

Preferred embodiments of the present invention will now be described hereinbelow by way of example only with reference to the accompanying drawings, in which:
Figure 1 is a schematic sectional view of a heat resistant stainless steel wire in accordance with a first embodiment of the present invention;
Figure 2 is a fragmentary sectional view in enlarged scale of the heat resistant stainless steel wire of Figure 1;
Figure 3 is a schematic sectional view of the heat resistant stainless steel wire of Figure 1 provided with a coating;
Figure 4 is a graph showing the relationship between the diameter of the ceramic particles and the degree of covering by the covering layer in the heat resistant stainless steel wire according to the first embodiment of the present invention;
Figure 5 is a graph showing the results of tensile strength tests performed on the heat resistant stainless steel wire according to the first embodiment of the present invention and Comparative Examples;
Figure 6 is a graph showing the relationship between the addition of Al₂O₃ to the ceramic particles and the oxidation weighting of the heat resistant stainless steel wire according to the first embodiment of the present invention;
Figure 7 is a graph showing the relationship between the addition of Al₂O₃ to the ceramic particles and the tensile strength of the heat resistant stainless steel wire according to the first embodiment of the present invention;
Figure 8 is a schematic sectional view of a heat resistant stainless steel wire in accordance with a second embodiment of the present invention;
Figure 9 is a block diagram showing the tensile strength of the heat resistant stainless steel wire according to the second embodiment of the present invention and a Comparative Example;
Figure 10 is a graph showing the relationship between the tensile strength and exposure time at 1100°C of the heat resistant stainless steel wire according to the second embodiment of the present invention and a Comparative Example;
Figure 11 is a graph showing the relationship between the average diameter of the crystalline particles and the fracture elongation of the ferritic phase in the second layer of the heat resistant stainless steel wire according to the second embodiment of the present invention;
Figure 12 is a graph showing the relationship between the average diameter of the crystalline particles and the tensile strength of the second layer in the heat resistant stainless steel wire according to the second embodiment of the present invention; and
Figure 13 is a graph showing the relationship between the thickness of the first layer and the rate of occurrence of cracks in the heat resistant stainless steel wire according to the second embodiment of the present invention.

### FIRST EMBODIMENT

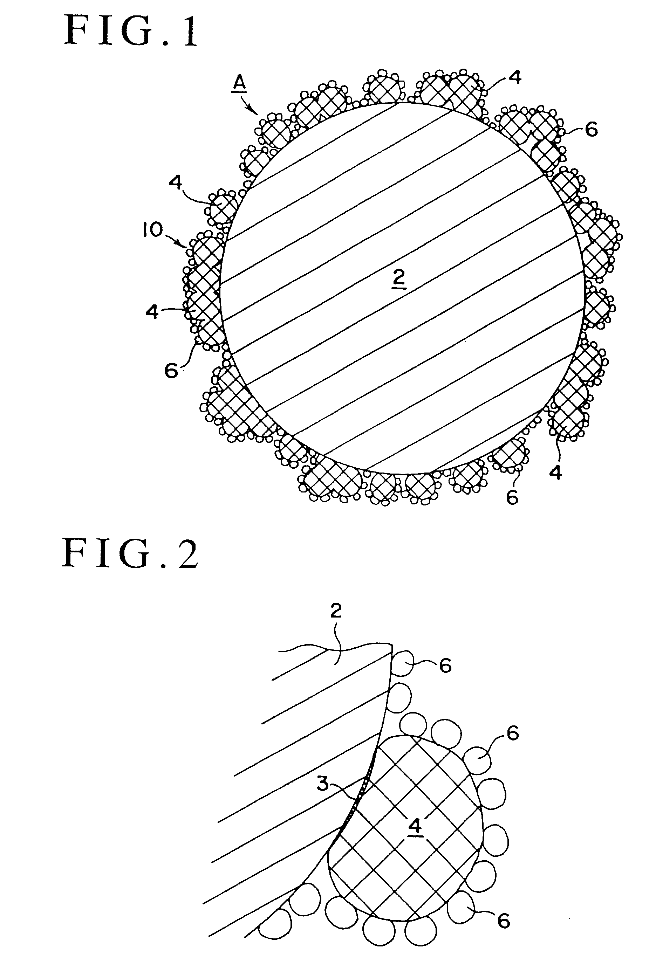

A heat resistant stainless steel wire in accordance with a first embodiment of the present invention (as shown in Figures 1 and 2) was fabricated as follows. A synthetic rubber based adhesive formed from acrylic rubber, an organic solvent, isohexane gas, etc., was coated, by spraying, on the surface of a thin stainless steel wire 2 of 0.2 mm diameter as a substrate metal. A mixture of Ni-Cr-Al alloy powder 4 having an average particle diameter of 5 to 20 micron and ceramic powder 6 such a Al₂O₃, SiO₂, MgO, ZrO₂, BaTiO₃, TiO₂, etc., having an average particle diameter of 0.3 to 1.0 micron was applied to the surface of the adhesive coated on the surface of the stainless steel wire 2. Subsequently, the stainless steel wire 2 was heated for about two hours under vacuum at a temperature of 1100 to 1300°C to obtain a heat resistant stainless steel wire "A" covered with particulate material.

The surface of the heat resistant stainless steel wire "A" covered with particulate material obtained according to the present invention was analyzed. The Ni-Cr-Al alloy powder 4 and the ceramic powder 6 covered, and were adhered to, the surface of the stainless steel wire 2, with the stainless steel wire.2 having the same shape and the covering particles having the same diameter as before being treated (as shown in Figure 1). The particles 4, 6 covering the stainless steel wire 2 were not disposed one above the other but uniformly dispersed into a covering layer 10 as a substantially single layer. The covering particles 4, 6 were not agglomerated or sintered.

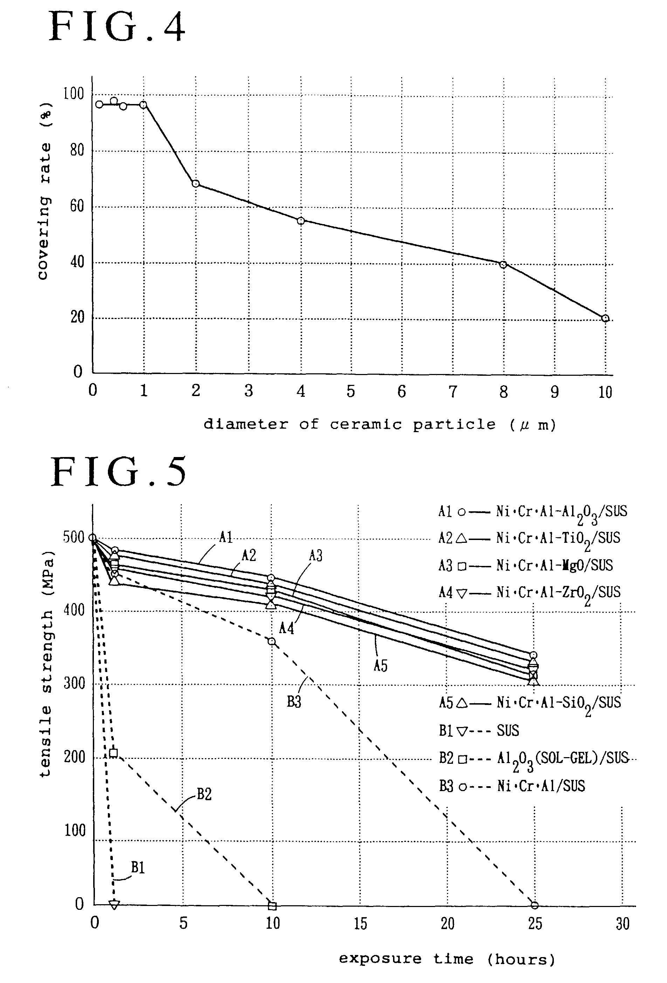

With regard to the ceramic particles 6 covering the surface of the stainless steel wire 2, as shown in Figure 4 the particle size distribution becomes more uniform as the particle diameter becomes smaller, thereby rendering the covering layer 10 more uniform. It has been found from comparative tests that when the average diameter of the ceramic particles 6 covering the surface of the stainless steel wire 2 exceeds 1 micron, the ceramic particles 6 adhere only poorly to the stainless steel wire 2 and a part of the surface of the stainless steel wire 2 is not covered at all with particulate material. It has been further found that when only Ni-Cr-Al alloy particles are used as the particulate material for covering the surface of the stainless steel wire 2, agglomeration of the Ni-Cr-Al alloy particles occurs.

As a result of analysing sections of the heat resistant stainless steel wire "A" covered with particulate material according to the present invention, it has been found (as shown in Figure 2), that a reaction layer 3 comprising constituent elements of the covering particles 4, 6 and constituent elements of the stainless steel wire 2 is formed at the interface between the covering particles 4, 6 and the stainless steel wire 2. This results from the fact that under vacuum the fine ceramic particles 6 and the Ni-Cr-Al alloy particles 4 are reduced by carbon (C) contained in the organic solvent and react with the stainless steel wire 2 as the substrate metal.

For the evaluation of the adhesion between the stainless steel wire 2 as the substrate metal and the covering layer 10 comprising the covering particles 4, 6 of the heat resistant stainless steel wire "A" according to the present invention, self-winding tests were conducted where in one case the heat resistant stainless steel wire "A" covered with particulate material was repeatedly heated and in another case the heat resistant stainless steel wire "A" covered with particulate material was not heated. It has been found as the result of those tests that when the heat resistant stainless steel wire "A" covered with particulate material was wound and then straightened after being wound, the covering particles 4, 6 did not fall off. The absence of cracking of the covering layer 10 and detachment of the covering particles 4, 6 results from the fact that the covering particles 4, 6 and the stainless steel wire 2 are bonded together through the reaction layer 3 and the ceramic particles 6 are not bonded to each other but are independent, as a consequence of which thermal stress is relieved.

Next, with respect to heat resistant stainless steel wires A1 - A5 covered with particulate material according to the present invention, which use, as the particulate material, Ni-Cr-Al alloy particles and ceramic particles such as Al₂O₃, TiO₂, MgO, ZrO₂, SiO₂, BaTiO₃, etc., and thin stainless steel wires B1 - B3 as Comparative Examples, heat resistant strength tests were conducted to determine the change in strength after exposure to atmosphere at a temperature of 1100°C for 25 hours. As shown in Figure 5, the tensile strength of the heat resistant stainless steel wires A1 - A5 according to the present invention was 300 MPa or more. On the other hand, the tensile strength of the uncovered stainless steel wire B1, the tensile strength of the stainless steel wire B2 covered with Al₂O₃ by the Solgel method, and the tensile strength of the stainless steel wire B3 covered with only Ni-Cr-Al alloy could not be measured after one hour of exposure, 10 hours of exposure, and 25 hours of exposure, respectively.

With regard to the heat resistant stainless steel wire A1 covered with particulate material in which 5% by weight or more of Al₂O₃ particles were added to Ni-Cr-Al alloy particles, a heat resistant strength test, in which the heat resistant stainless steel wire A1 was exposed to atmosphere at a temperature of 1100°C for 25 hours, was conducted, after which an oxide layer on the surface of the stainless steel wire was analyzed. Chrome (Cr) and aluminum (Al) were detected in the oxide layer. On the other hand, iron (Fe) and chrome (Cr) were detected in an oxide layer on the surface of the stainless steel wire B3 having only Ni-Cr-Al alloy as the particulate material.

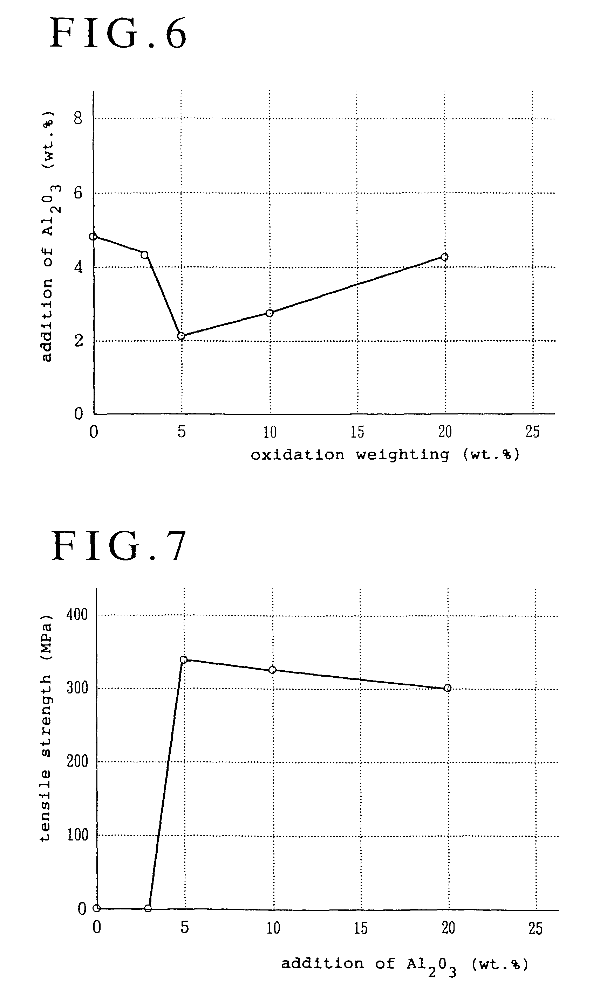

It has been found by the afore-mentioned heat resistance strength test that when 5% by weight or more of Al₂O₃ particles is added to Ni-Cr-Al alloy particles, as the particulate material for covering the surface of the stainless steel wire, the oxidation weighting is reduced and the tensile strength after conducting the strength test is improved (as shown in Figures 6 and 7). The oxidation weighting PW is represented by PW=100 (W1-W0)/W0, wherein W1 and W0 respectively represent the mass of the heat resistant stainless steel wire before and after the heat resistance strength test. It is considered from the afore-mentioned analysis and the heat resistance strength test what when Al₂O₃ particles are added to Ni-Cr-Al alloy particles, as the particulate material of the covering layer, the heat resistance strength is improved because the oxidation of iron (Fe) is suppressed.

It has been found that the specific resistance of the surface of the heat resistant stainless steel wire "A" according to the present invention at ordinary room temperature was approximately 20 MΩ-cm, and particularly, the specific resistance of the surface of the heat resistant stainless steel wire A3 covered with particulate material including MgO was approximately 10 MΩ-cm even at a temperature of 1000°C.

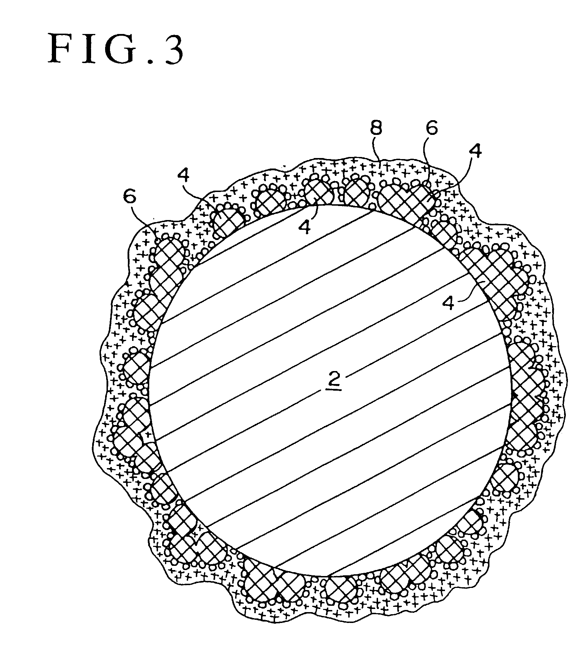

Next, a solgel coating was applied to the surface of the covering layer 10 of the heat resistant stainless steel wire "A" covered with Ni-Cr-Al alloy particles 4 and ceramic particles 6 of Al₂O₃, SiO₂, MgO, ZrO₂, BaTiO₃ and TiO₂, as the particulate material, using a coating solution prepared from commercially available metal alkoxide. In accordance with the conditions of solgel coating the heat resistant stainless steel wire "A" was dipped into the coating solution, raised therefrom, subjected to hydrolysis, and then heat treated in atmosphere at a temperature of 600°C (as shown in Figure 3). In a Comparative Example comprising thin stainless steel wire not covered with particulate material, the coating was peeled off simply, whereas in the heat resistant stainless steel wire "A" covered with particulate material according to the present invention, the coating layer 8 could not be peeled off when the thickness thereof was from 1 to 2 micron. It is considered that the contact strength of the coating layer 8 is enhanced due to an anchoring effect of the ceramic particles 6 adhered to the surface of the stainless steel wire 2.

### SECOND EMBODIMENT

A heat resistant stainless steel wire in accordance with a second embodiment of the present invention was fabricated as follows. A synthetic rubber based adhesive formed from acrylic rubber, an organic solvent, isohexane gas, etc., was coated, by spraying, on the surface of a thin austenitic stainless steel wire (SUS304) 12 having a diameter of 0.25 mm. Alloy powder comprising by weight 50% of chrome and 50% of aluminum was applied to the surface of the synthetic rubber based adhesive and then subjected to a heat treatment for about two hours under vacuum at a temperature of 1100°C.

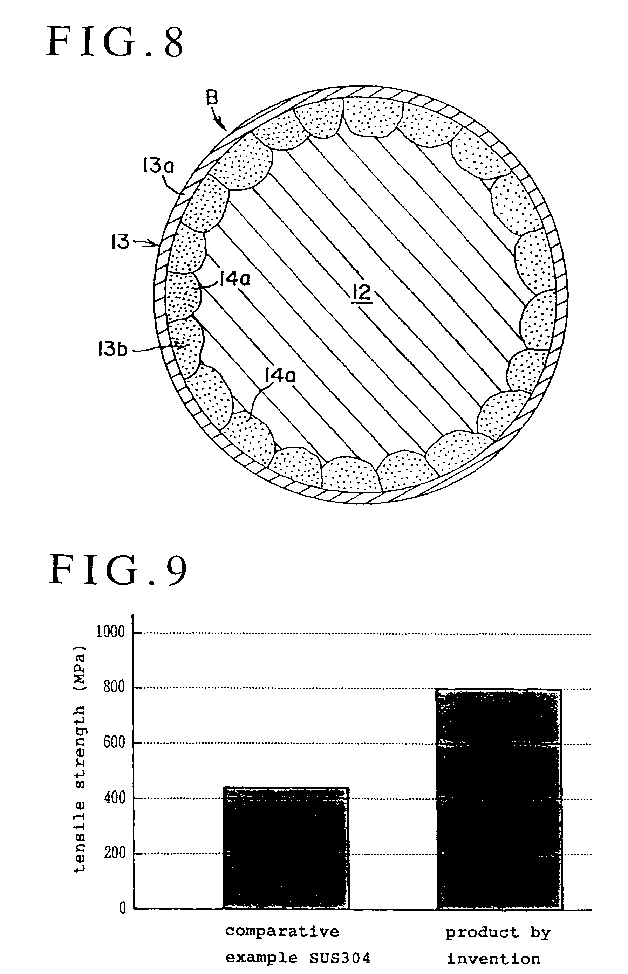

A section of the heat resistant stainless steel wire "B" according to the present invention, obtained as above-described, was analyzed. A Fe-Cr-Ni-Al alloy layer 13 having a fine dispersed phase of thickness 10 to 50 micron was formed on the surface of the stainless steel wire 12 (as shown in Figure 8). It has been found that the alloy layer 13 on the surface of the stainless steel wire 12 is not a single layer but comprises an alloy layer of 10 micron or less in thickness comprising aluminum and an aluminum-iron alloy, that is, a first layer 13a formed on the outermost surface, and an alloy layer of 20 micron or more in thickness in which an aluminum-iron compound and an aluminum-nickel compound are dispersed in ferritic crystalline grains 14a of 10 to 30 micron in particle diameter, that is, a second layer 13b formed internally of the first layer 13a. The average diameter of the crystalline particles of the aluminum-iron compound and the aluminum-nickel compound was 1 micron or less. Austenitic stainless steel having crystalline particles of average diameter of 20 to 50 micron is present in a center portion of the section of the heat resistant stainless steel wire "B". The second layer 13b of ferritic material is soft as compared with the iron-aluminum alloy of the first layer 13a.

The tensile strength of the heat resistant stainless steel wire "B" according to the present invention and a Comparative Example were measured. The tensile strength of the heat resistant stainless steel wire "B" according to the present invention was found to be 800 MPa (as shown in Figure 9). The strength of a stainless steel wire heat treated without a covering alloy powder as a Comparative Example (corresponding to the substrate metal of the present invention) was found to be 455 MPa. It is considered that the heat resistant stainless steel wire "B" according to the present invention is improved in strength by one or both of the thermal stress occurring from a difference in the coefficient of thermal expansion between the second layer 13b formed from an alloy layer of ferritic material on the surface of the stainless steel wire 12 and the austenitic stainless steel of the stainless steel wire 12, or the residual stress generated between the polycrystalline alloy layers on the surface of the stainless steel wire 12.

Heat resistance tests were conducted on the heat resistant stainless steel wire "B" according to the present invention, a thin stainless steel wire formed from SUS304 as a first Comparative Example, and a thin stainless steel wire formed from FCH2 (Fe-Cr-Al alloy) as a second Comparative Example for 25 hours in atmosphere at a temperature of 1100°C. The tensile strength of the stainless steel wire of the first Comparative Example formed from SUS304 decreases to a level which is impossible to measure after about one hour of heating; the tensile strength of the stainless steel wire of the second Comparative Example formed from FCH2 (Fe-Cr-Al alloy) was 417 MPa; whereas the tensile strength of the heat resistant stainless steel wire "B" according to the present invention even after 25 hours of heating was 670 MPa.

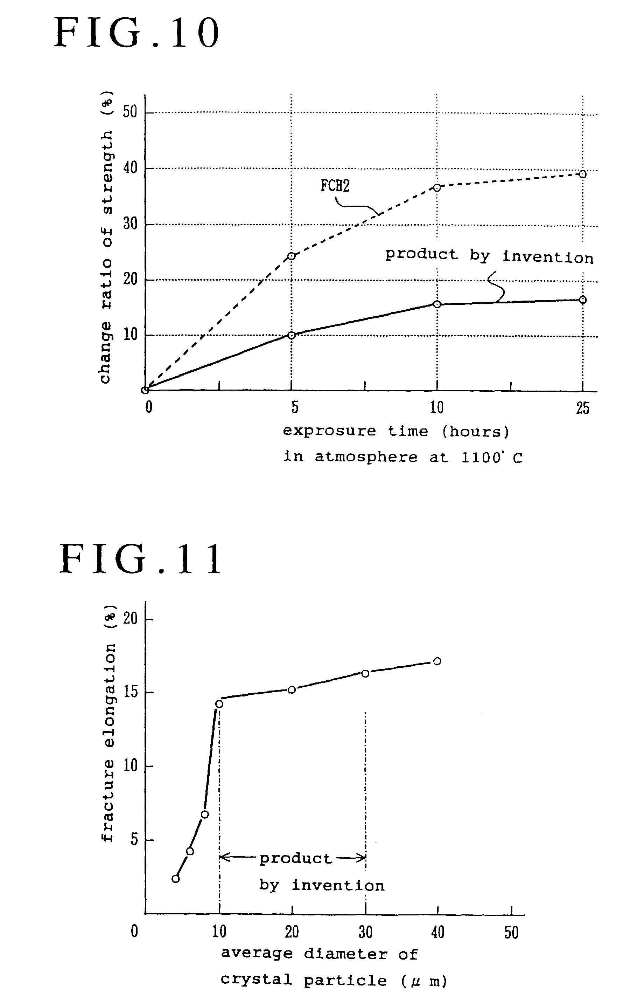

Figure 10 shows the relationship between the exposure time and the change (lowering) ratio of the tensile strength of the heat resistant stainless steel wire "B" according to the present invention and the stainless steel wire formed from FCH2 (Fe-Cr-Al alloy) of the second Comparative Example. It is evident that the tensile strength of the heat resistant stainless steel wire "B" according to the present invention decreases to a far lesser degree than the stainless steel wire formed from FCH2 (Fe-Cr-Al alloy) of the second Comparative Example.

The afore-mentioned heat resistance test was conducted with various diameters of stainless steel wire 12 as the substrate metal with respect to the heat resistant stainless steel wire "B" according to the present invention and the stainless steel wire formed from FCH2 (Fe-Cr-Al alloy) of the second Comparative Example. The decrease in tensile strength of the heat resistant stainless steel wire "B" according to the present invention is smaller than that of the stainless steel wire formed from FCH2 (Fe-Cr-Al alloy) of the second Comparative Example for wire diameters up to 0.5 mm.

Further, the afore-mentioned heat resistance test was conducted with varying thicknesses of substrate metal with respect to heat resistant stainless steel strip "B" according to the present invention and stainless steel strip formed from FCH2 (Fe-Cr-Al alloy) as a second Comparative Example. The decrease in tensile strength of the heat resistant stainless steel strip "B" according to the present invention is smaller than that of the stainless steel strip formed from FCH2 (Fe-Cr-Al alloy) of the second Comparative Example for thicknesses up to 0.5 mm.

Stainless steel wire or strip formed from FCH2 (Fe-Cr-Al alloy) of the second Comparative Example having a diameter of 0.2 mm or less is very difficult to subject to plastic working (such as stretching, rolling and bending) . On the other hand, the heat resistant stainless steel wire and heat resistant stainless steel strip "B" according to the present invention can be worked plastically without any difficulty even if the diameter or thickness is made smaller by using stainless steel wire or strip having a relatively good processability.

Figure 11 shows the relationship between the average diameter of the crystalline particles of the ferritic phase in the second layer 13b and the fracture elongation in the heat resistant stainless steel wire "B" according to the present invention. It is understood that when the average diameter of the crystalline particles of the second layer 13b exceeds 10 micron, the fracture elongation increases.

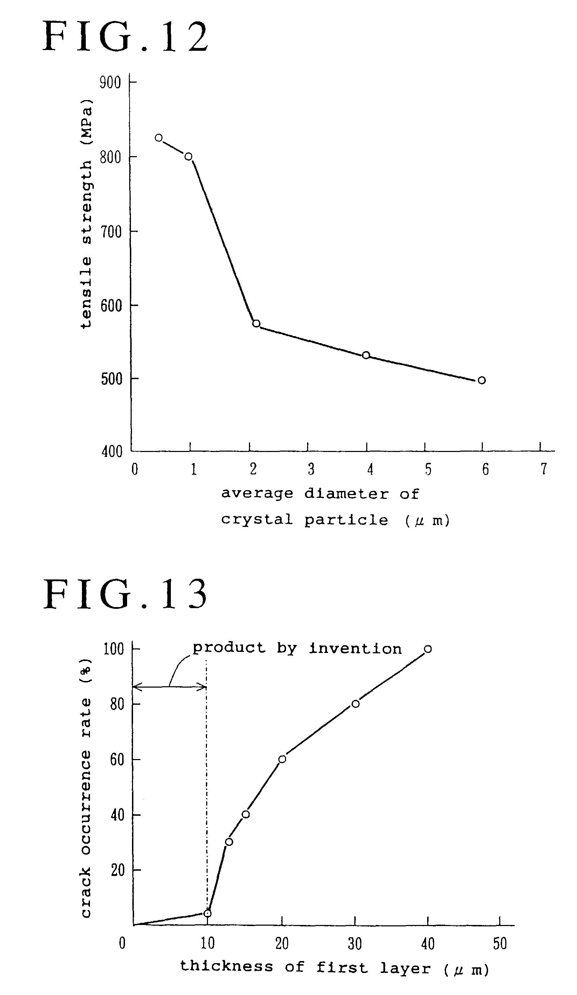

Figure 12 shows the relationship between the average diameter of the crystalline particles of the aluminum-iron compound and the aluminum-nickel compound dispersed in the second layer 13b and the tensile strength of the heat resistant stainless steel wire "B" according to the present invention. It is understood that when the average diameter of the crystalline particles of the compounds dispersed in the second layer 13b is less than 1 micron, the tensile strength is materially enhanced.

When the heat treatment time of the heat resistant stainless steel wire "B" according to the present invention is excessively long, the crystals of the austenitic phase of the stainless steel wire 12 in the center portion of the heat resistant stainless steel wire "B" grow and the ferritic phase of the second layer 13b dissipates. A suitable heat treatment time is about two hours. Preferably, the first layer 13a is formed to be thin because it is brittle. Alumina of the first layer 13a is high in heat resistance to prevent the second layer 13b from being oxidized.

A plurality of samples having different thicknesses of the first layer 13a formed of a composite phase of aluminum and an aluminum-iron alloy were prepared using various heat treatment times to obtain heat resistant stainless steel wire "B" according to the present invention. Winding tests were conducted on the obtained heat resistant stainless steel wire "B" and the surface thereof analysed. It was found that when the thickness of the first layer 13a exceeds 10 micron, cracks occurred in the first layer 13a (as shown in Figure 13). From this viewpoint, it is preferable that the heat treatment time for obtaining the heat resistant stainless steel wire "B" according to the present invention is not too long.

In the present invention, it is preferable to use thin austenitic stainless steel wire as the substrate metal, from which carbide and martensite are much less likely to be produced during the heat treatment. An austenitic stainless steel wire having a chemical composition of by weight 0.15% or less of carbon, 15 to 26% of chrome, and 3.5 to 28% of nickel is particularly preferred. When the composition ratio of carbon increases, the carbide of the second layer 13b undesirably precipitates in the grain boundary and promotes brittleness.

It will be understood that the present invention is not limited to the above-described embodiments, but can be modified in many different ways within the scope of the appended claims.

## Claims

1. A heat resistant wire or strip comprising an austenitic stainless steel wire or strip, a first layer comprising aluminum and an iron-aluminum alloy formed as an outermost surface, and a second layer comprising an aluminum-iron compound and an aluminum-nickel compound dispersed in a ferritic stainless steel mainly comprising iron-chrome formed as an intermediate layer.

2. A heat resistant stainless steel wire or strip according to claim 1, wherein the thickness of said first layer is 10 micron or less.

3. A heat resistant stainless steel wire or strip according to claim 1 or 2, wherein the average diameter of the crystalline particles of said second layer is 10 to 30 micron.

4. A heat resistant wire or strip according to any of claims 1 to 3, wherein the average diameter of the crystalline particles of the aluminum-iron and aluminum-nickel compounds dispersed in said second layer is 1 micron or less.

5. A heat resistant wire or strip according to any of claims 1 to 4, wherein said austenitic stainless steel contains by weight 0.15% or less of carbon, 15 to 26% of chrome, and 3.5 to 28% of nickel.

6. A heat resistant wire or strip according to any of claims 1 to 5, wherein the diameter or thickness of said wire or strip is 0.5 mm or less.

7. A heat resistant wire or strip according to any of claims 1 to 6, wherein said alloy particles are particles deposited on the stainless steel wire or strip.
